# EUROPEAN PATENT APPLICATION

(11) **EP 3 608 371 A1**
(43) Date of publication of application: **12.02.2020**
(21) Application number: 18188153.3
(22) Date of filing: 09.08.2018
(51) Int. Cl.: C09D 11/101

(54) **A METHOD FOR IMPROVING ADHESION OF RADIATION CURABLE INKS**

(71) Applicant: OCE Holding B.V., 5914 CA Venlo (NL)
(72) Inventor: BLOCKEN, Evelyn R.C.Y., 5914 CA Venlo (NL); VAN BUUL, Arend M., 5914 CA Venlo (NL); HOFSTRA, Ronald M.J., 5914 CA Venlo (NL); VAN DE PUT, Marcellus W.P., 5914 CA Venlo (NL)
(74) Representative: OCE IP Department

(57) **Abstract**

The present invention relates to a method for improving the adhesion of radiation curable inks, in particular radiation curable gelling inks for inkjet printing, wherein the ink comprises a chain transfer agent and the method comprises a step of heating the radiation curable ink to activate said chain transfer agent.

## Description

### FIELD OF THE INVENTION

The present invention relates to a method for applying an image onto a recording medium whereby the adhesion of radiation curable inks, in particular radiation curable gelling inks for inkjet printing, is improved. Further, the invention relates to a printer for printing an image onto a recording medium configured for performing such a method.

### BACKGROUND ART

Methods for applying an image onto a recording medium using a radiation curable ink composition are known in the art. In general, such methods comprise the step of applying a UV curable ink onto a recording medium by for instance jetting droplets of ink using an inkjet printer.

When applying an image onto a recording medium using a radiation-curable ink composition, it is desired that the ink applied onto the recording medium adhere well to said recording medium. If the ink does not adhere well, the printed image may easily be damaged which is undesired. Thus the ink may come loose from the recording medium and thereby reducing the quality of the image applied onto the recording medium.

Patent US 2003/0021691 describes to use a primer to improve the adhesion wherein the primer is selected based on the intended recording medium and the intended ink used. The primer may be cured using heat and may react with both the recording medium and the ink. This however requires additional equipment to apply the primer to the recording medium. Either the primer is applied with different machinery before the recording medium is supplied into a printer, or the printer is equipped with additional printheads configured to apply the primer to the recording medium. This increases the costs for printing an image onto a recording medium.

It is therefore an object of the present invention to provide a method for applying an image onto a recording medium wherein the adhesion of the image is improved overcoming the above issues.

### SUMMARY OF THE INVENTION

The object of the invention is achieved in a method for applying an image onto a recording medium, the method comprising the steps of:
- supplying a radiation curable ink composition comprising a chain transfer agent into a printer, and
- heating the radiation curable ink composition comprising the chain transfer agent to activate said chain transfer agent,
- applying the heated radiation curable ink composition onto a recording medium using a printhead thereby creating an image on said recording medium, and then
- curing the radiation curable ink composition applied onto the recording medium using a radiation source thereby fixating the image created on the recording medium.

The radiation curable ink composition may comprise, in addition to the chain transfer agent, one or more radically polymerisable components such as acrylates, vinyls, epoxides, and/or vinyl ethers which upon the application of radiation such as UV radiation form a polymer network. Preferably the radically polymerisable component is a (meth)acrylate. The radiation curable ink composition may further comprise one or more photo initiators facilitating the polymerization of the radically polymerisable component. Furthermore the radiation curable ink composition may comprise one or more colorants and/or pigments. The radiation curable ink composition may be supplied to the printer by means of an ink reservoir or container which is placed into the printer. The ink reservoir or container is configured to, in operation, heat the radiation curable ink. The reservoir or container may be, for instance, electrically heated. After supplying the radiation curable ink comprising the chain transfer agent the ink is heated to activate the chain transfer agent forming dimers and trimers in the ink upon activation before the ink is applied onto the recording medium. Thus a pre-cure of the ink occurs upon heating of the ink. This pre-cure of the ink results in a better defined polymer network after the heated ink is applied on to the recording medium and cured. The ink reservoir or container may hold and heat the ink up to 12 hours and up to 70 degrees Celsius. The longer the ink is heated, the longer the chain transfer agents present in the ink is activated leading to an increase in the formation of dimers and trimers in the ink and thus improving the final polymer network of the ink layer in the final image. After heating the radiation curable ink, the ink is applied onto a recording medium, such as a vinyl substrate, using one or more printheads configured to, in operation, jet ink onto the recording medium and thereby creating an image on the recording medium. The created image is then cured by radiating the ink using a radiation source such as a UV lamp thereby fixating the created image. As a result of the better defined polymer network, the adhesion of the applied image is improved.

In an embodiment, the chain transfer agent comprises a thiol compound. Thiol compounds are known to improve the curing of acrylate systems. Suitable thiol compounds are, for instance, multifunctional poly-thiols. Thus it is an advantage of the present embodiment that the chain transfer agent also improves the curing of acrylate based radiation curable inks.

In an embodiment, the thiol compound is pentaerythritol tetra (3-mercaptoproprionate) and/or trimethylpropane tri (3-mercaptoproprionate). Both compounds are known not to show oxygen inhibition when used in radiation cured systems. Upon curing, it is thus less probable that polymer chains are terminated early due to oxygen scavenging free radicals in the curing process and thus the risk of an incomplete cure of the radically polymerisable components is also reduced. As such it is an advantage of the present embodiment that pentaerythritol tetra (3-mercaptoproprionate) and/or trimethylpropane tri (3-mercaptoproprionate) have a positive influence on the curing of the ink layer.

In an embodiment, the radiation curable ink composition is heated in an ink reservoir of the printer. By heating the radiation curable ink composition in the ink reservoir, the chain transfer agent may be activated before the ink is supplied to the printhead creating an image and thus the pre-curing may start well in time to allow sufficient dimers and trimers to form. The ink may be present and heated in the ink reservoir up to 12 hours. It is an advantage of the present embodiment that the final polymer network is even further improved due to the additional dimers and trimers formed during the pre-cure. Alternatively, the radiation curable ink may be heated during the production of the radiation curable ink to form dimers and trimers in the radiation curable ink before the ink is supplied into the printer.
In an embodiment, the radiation curable ink composition further comprises a gelling agent. The gelling agent may provide the radiation curable ink with gelling properties. A gelling radiation curable ink may be fluid at elevated temperatures and may be in a gelled state at lower temperatures. The temperature at which a gel is formed is referred to as gelling temperature. The gelling temperature may be suitably controlled by selecting an appropriate gellant. Examples of suitable gellants are waxes, such as vegetable waxes, such as candelila wax, carnauba wax, rice wax, jojoba wax, animal waxes, such as bees wax and mineral waxes, such as montan wax, fatty acids, fatty alcohols, fatty acid amides, fatty acid esters and ketones. As a result, the gelling radiation curable ink may be at a gelled state after the ink is applied onto the recording medium ensuring the ink does not flow off very smooth recording media and thus does not flow off the recording medium before the ink is cured.

In an aspect of the invention, a printer for printing an image onto a recording medium is provided wherein the printer comprises:
- An ink reservoir for holding a radiation curable ink composition comprising the chain transfer agent wherein the ink reservoir is configured to, in operation, being heated to activate said chain transfer agent present in the ink composition;
- A printhead for jetting the radiation curable ink composition comprising the chain transfer agent onto a recording medium;
- A radiation source to cure the radiation curable ink composition comprising the chain transfer agent jetted onto the recording medium by the printhead;
- A control unit configured to perform the method for applying an image onto a recording medium as described above.
The printer is configured to, in operation, perform the method for applying an image onto a recording medium as described above wherein a control unit enables the heating process of the radiation curable ink in the ink reservoir or container and, after the radiation curable ink has been subjected to heat, the control unit enables the radiation curable ink to be supplied to the printheads which jet the ink onto a recording medium. When an image is created by jetting the ink using said printheads, the control unit then activates a radiation source such as a UV lamp which irradiates the image created on the recording medium.

### BRIEF DESCRIPTION OF THE DRAWINGS

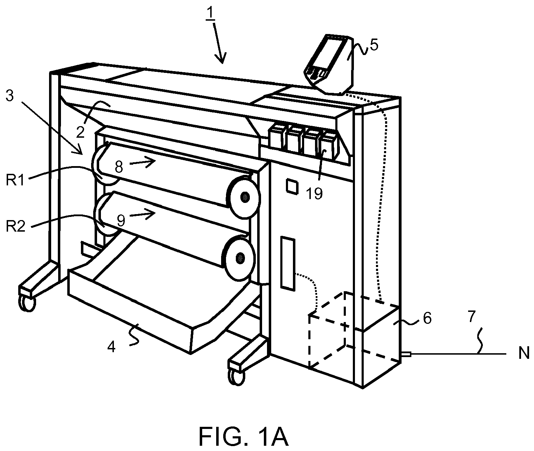

Fig. 1A is a schematic perspective view of a printing system according to the present invention

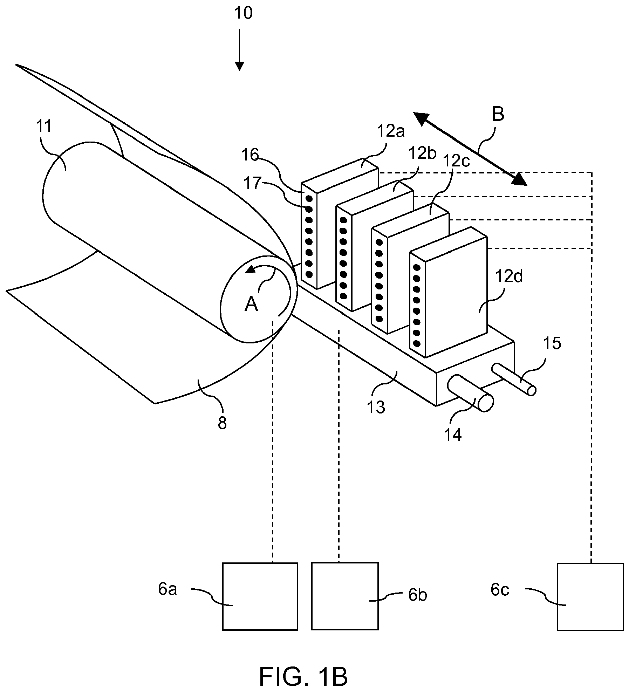

Fig. 1B is a schematic perspective view of an inkjet printing assembly the printing system in Fig. 1A

### DETAILED DESCRIPTION

### Printing system

Fig. 1A shows an image forming apparatus 1, wherein printing is achieved using a wide format inkjet printer. The wide-format image forming apparatus 1 comprises a housing 2 holding the printing assembly 10. The image forming apparatus 1 also comprises at least one media input unit 3 for storing one or more media 8, 9 in the form of a wound-up roll of web medium. The media 8, 9 are supplied by a roll 8, 9. The roll 8 is supported on the roll support R1, while the roll 9 is supported on the roll support R2. A transport path extends from the media input unit 3 along the printing assembly 10 to a receiving unit 4 to collect the medium 8, 9 after printing. A storage unit 19 for marking material is provided to hold marking materials. Each marking material for use in the printing assembly 10 is stored in one of a plurality of containers 19 arranged in fluid connection with the respective print heads for supplying marking material to said print heads to print an image on the medium 8, 9. The containers 19 may be configured to heat the marking material stored in the containers 19. The receiving unit 4 may comprise a take-up roller for winding up the printed medium 8, 9 or a receiving tray for supporting sheets of printed medium 8, 9. Optionally, the receiving unit 4 may comprise processing means for processing the medium 8, 9 after printing, e.g. a post-treatment device such as a coater, a folder or a puncher. The wide-format image forming apparatus 1 furthermore comprises a user interface 5 for receiving print jobs and optionally for manipulating print jobs. The local user interface unit 5 is integrated to the print engine and may comprise a display unit and a control panel. Alternatively, the control panel may be integrated in the display unit, for example in the form of a touch-screen control panel. The local user interface unit 5 is connected to a control unit 6 connected to the image forming apparatus 1. The control unit 6, for example a computer, comprises a processor adapted to issue commands to the image forming apparatus 1, for example for controlling the print process. The control unit 6 may further be configured to enable the heating process of the marking material stored in the containers 19. The image forming apparatus 1 may optionally be connected to a network N. The connection to the network N is diagrammatically shown in the form of a cable 7, but nevertheless, the connection could be wireless. The image forming apparatus 1 may receive printing jobs via the network N. Further, optionally, the control unit 6 of the image forming apparatus 1 may be provided with a USB port, so printing jobs may be sent to the image forming apparatus 1 via this USB port.

### Printing assembly

Fig. 1B shows an ink jet printing assembly 10. The ink jet printing assembly 10 comprises a medium support surface to support the medium 8, 9 during printing. The medium support surface in Fig. 1B is provided on a platen 11 in the form of a drum rotatable in direction A, but may, alternatively, be a flat support surface. The medium support surface is preferably provided with suction holes for at least temporarily holding the medium 8, 9 in a fixed position with respect to the medium support surface. The ink jet printing assembly 10 comprises print heads 12a - 12d, mounted on a scanning print carriage 13, or alternatively as a stationary page-wide array. The scanning print carriage 13 is guided by suitable guides 14, 15 to move in reciprocation in the main scanning direction B. Each print head 12a - 12d comprises an orifice surface 16, which orifice surface 16 is provided with at least one orifice 17. The print heads 12a - 12d are configured to eject droplets of marking material onto the medium 8, 9. The medium support surface, the carriage 13 and the print heads 12a - 12d are controlled by suitable controlling means 6a, 6b and 6c, respectively.

The medium 8, 9 is supplied in web form and may be composed of e.g. paper, cardboard, label stock, coated paper, plastic or textile. The medium 8, 9 is moved in the sub-scanning direction A by the platen 11 along four print heads 4a - 4d provided with a fluid marking material.

A scanning print carriage 13 carries the four print heads 12a - 12d and may be moved in reciprocation in the main scanning direction B parallel to the medium support surface, such as to enable scanning of the medium 8, 9 in the main scanning direction B. Any number of print heads may be employed. Preferably, at least one print head 12a - 12d per color of marking material is placed on the scanning print carriage 13, for example one for print head 12a - 12d for each of the applied colors, usually black, cyan, magenta and yellow is present. Often, in a full-color printer, black marking material is used more frequently in comparison to differently colored marking material. Therefore, more print heads 12a - 12d containing black marking material may be provided on the scanning print carriage 13 compared to print heads 12a - 12d containing marking material in any of the other colors. Alternatively, the print head 12a - 12d containing black marking material may be larger than any of the print heads 12a - 12d, containing a differently colored marking material.

The carriage 13 is guided by guides 14, 15 in the form of guide rails or rods 14, 15, as depicted in Fig. 1B. The carriage 13 may be driven along the guides 14, 15 by a suitable driving actuator (not shown). An alternative is to move the medium 8, 9 in the main scanning direction B.

The printing assembly 10 may further comprise a radiation curable source not shown in Fig. 1B. Such a radiation curable source may be, for instance, a UV lamp which in operation radiates UV light onto the medium 8, 9 after the marking materials have been applied on the medium 8, 9 by print heads 12a - 12d.

### Print heads

Each print head 12a - 12d comprises an orifice surface 16 having at least one orifice 17, in fluid communication with a pressure chamber containing fluid marking material provided in the print head 12a - 12d. On the orifice surface 16, a number of orifices 17 is arranged in a single linear array parallel to the sub-scanning direction A. Eight orifices 17 per print head 12a - 12d are depicted in Fig. 1B, however obviously in a practical embodiment at least several hundreds of orifices 17 may be provided per print head 12a - 12d, optionally arranged in multiple arrays. As depicted in Fig. 1B, the respective print heads 12a - 12d are placed parallel to each other such that corresponding orifices 17 of the respective print heads 12a - 12d are positioned in-line in the main scanning direction B. This means that a line of image dots in the main scanning direction B may be formed by selectively activating up to four orifices 17, each of them being part of a different print head 12a - 12d. This parallel positioning of the print heads 12a - 12d with corresponding in-line placement of the orifices 17 is advantageous to increase productivity and/or improve print quality. Alternatively multiple print heads 12a - 12d may be placed on the print carriage adjacent to each other such that the orifices 17 of the respective print heads 12a - 12d are positioned in a staggered configuration instead of in-line. For instance, this may be done to increase the print resolution or to enlarge the effective print area, which may be addressed in a single scan in the main scanning direction. The image dots are formed by ejecting droplets of marking material from the orifices 17.

Upon ejection of the marking material, some marking material may be spilled and stay on the orifice surface 16 of the print head 12a - 12d. The ink present on the orifice surface 16, may negatively influence the ejection of droplets and the placement of these droplets on the medium 8, 9. Therefore, it may be advantageous to remove excess of ink from the orifice surface 16. The excess of ink may be removed for example by wiping with a wiper and/or by application of a suitable anti-wetting property of the surface, e.g. provided by a coating.

### Example and Comparative Examples

### Radiation Curable Ink Composition

A radiation curable ink composition was prepared by adding together 35.5 grams of SR355, 9.0 grams of SR217, 28.2 grams of SR606A, 0.7 grams of Tegorad 2250, 1.5 grams of pentaerythritol tetra stearate, 0.1 grams of Phenothiazine, 2.3 grams of Genocure BDMM, 3.8 grams of Genocure ITX, 4.3 grams of Genocure EPD, and 10 grams of a pigment dispersion comprising 25 wt% a pigment dispersed in SR 9003. After adding the materials together the materials were mixed using a stirrer under the application of heat, resulting in ink composition M. All chemicals are commercially available and were used as received.

### Example

6 grams of a thiol compound, PETMP, and 94 grams of the radiation curable ink composition M were put together and mixed resulting in ink composition E. The ink composition E was heated for 12 hours at 70 degrees Celsius. A rodcoat was made by applying a 12 µm thick layer of ink onto a receiving medium. As receiving medium MPI2000, a self-adhesive vinyl medium, was used. The ink layer was cured by irradiating the ink layer using a UV LED lamp. The rodcoat was transported under the lamp 3 times at a speed of 12.4 m/min. Adhesion was investigated using the Cross Hatch ASTM d3359 test procedure. The resulting sample showed an excellent adhesion. The resulting sample is a print sample in accordance with the present invention.

### Comparative Example 1

6 grams of a thiol compound, PETMP, and 94 grams of the radiation curable ink composition M were put together and mixed resulting in ink composition E. The ink composition E was not heated. A rodcoat was made by applying a 12 µm thick layer of ink onto a receiving medium. As receiving medium MPI2000, a self-adhesive vinyl medium, was used. The ink layer was cured by irradiating the ink layer using a UV LED lamp. The rodcoat was transported under the lamp 3 times at a speed of 12.4 m/min.

Adhesion was investigated using the Cross Hatch ASTM d3359 test procedure. The resulting sample showed a very poor adhesion. The resulting sample is not a print sample in accordance with the present invention.

### Comparative Example 2

Nothing was added to the radiation curable ink composition M and the ink formulation was not heated. Rodcoats were made by applying a 12 µm thick layer of ink onto a receiving medium. As receiving medium MPI2000, a self-adhesive vinyl medium, was used. The ink layer was cured by irradiating the ink layer using a UV LED lamp. The rodcoats were transported under the lamp 3 times at a speed of 12.4 m/min. Adhesion was investigated using the Cross Hatch ASTM d3359 test procedure. The resulting sample showed a poor adhesion. The resulting sample is not a print sample in accordance with the present invention.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims is herewith disclosed.

Further, the terms and phrases used herein are not intended to be limiting; but rather, to provide an understandable description of the invention. The terms "a" or "an", as used herein, are defined as one or more than one.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method for applying an image onto a recording medium, the method comprising the steps of:
- supplying a radiation curable ink composition comprising a chain transfer agent into a printer; and
- heating the radiation curable ink composition comprising the chain transfer agent to activate said chain transfer agent;
- applying the heated radiation curable ink composition onto a recording medium using a printhead thereby creating an image on said recording medium; and then
- curing the radiation curable ink composition applied onto the recording medium using a radiation source thereby fixating the image created on the recording medium.

2. The method according to claim 1, wherein the chain transfer agent comprises a thiol compound.

3. The method according to claim 2, wherein the thiol compound is pentaerythritol tetra (3-mercaptoproprionate) and/or trimethylpropane tri (3-mercaptoproprionate).

4. The method according to claim 1, wherein the radiation curable ink composition is heated in an ink reservoir of the printer.

5. The method according to claim 1, wherein the radiation curable ink composition further comprises a gelling agent.

6. A printer for printing an image onto a recording medium, wherein the printer comprises:
- An ink reservoir for holding a radiation curable ink composition comprising the chain transfer agent wherein the ink reservoir is configured to, in operation, being heated to activate said chain transfer agent present in the ink composition;
- A printhead for jetting the radiation curable ink composition comprising the chain transfer agent onto a recording medium;
- A radiation source to cure the radiation curable ink composition comprising the chain transfer agent jetted onto the recording medium by the printhead;
- A control unit configured to perform the method according to claim 1.
